# EUROPEAN PATENT APPLICATION

(11) **EP 4 467 271 A1**
(43) Date of publication of application: **27.11.2024**
(21) Application number: 22937043.2
(22) Date of filing: 20.05.2022
(51) Int. Cl.: B23D 15/04, B23D 17/04

(54) **SCREW SHEARING MACHINE**

(30) Priority: 12.04.2022 CN 202210377902
(71) Applicant: Zhejiang Prulde Electric Appliance Co., Ltd., Jinhua, Zhejiang 321035 (CN)
(72) Inventor: YANG, Weiming, Jinhua, Zhejiang 321035 (CN)
(74) Representative: karo IP
(86) International application number: PCT/CN2022/094053
(87) International publication number: WO 2023/197402

(57) **Abstract**

Disclosed is a screw-cutting shear, including a shearing assembly and a driving assembly; the shearing assembly includes a shear base, a stationary blade secured to the shear base, a shear lever hinged to the shear base, a moving blade secured to the shear lever, a reset spring connected to the shear lever, a cam rotatably connected to the shear base, and a roller rotatably connected to the shear lever; the driving assembly includes an electric motor driving the cam to rotate and a speed reducer, a cam surface and a roller outer circular surface interacting to drive the shear lever to swing to thereby drive the moving blade and the stationary blade to be fitted to shear off a screw, the cam surface and the roller outer circular surface being conical surfaces fitted with each other at an angle of X° so that when the cam is rotating, an axial force component is applied against the roller; under the action of the force, the shear lever moves axially along the bolt, so that the moving blade and the stationary blade constantly press tightly against a sheared end face; in this way, substantially no gap is formed therebetween when the moving blade and stationary blade are fitted to perform screw shearing, thereby preventing a sheared-off screw from formation of burrs.

## Description

### FIELD

The subject matter described herein relates to a cutting technology, and more particularly relates to a screw-cutting shear.

### BACKGROUND

A screw-cutting shear generally comprises a shear base, a stationary blade secured to the shear base, a shear lever, and a moving blade secured to the shear lever, the moving blade being fitted with the stationary blade to shear off a screw; in the shearing process, the cutting edge of the moving blade and the cutting edge of the stationary blade are fitted to act on a sheared end face of the screw. However, since the moving blade and the stationary blade are not completely seamlessly fitted during an actual shearing process, a gap likely exists between the moving blade and the stationary blade so that the screw sheared off has burrs formed.

### SUMMARY

To overcome the above and other drawbacks in conventional technologies, the disclosure provides a screw-cutting shear which may prevent a sheared-off screw from formation of burrs due to presence of a gap between a moving blade and a stationary blade.

In this respect, the disclosure adopts a technical solution below: a screw-cutting shear, comprising a shearing assembly and a driving assembly, wherein the shearing assembly comprises a shear base, a stationary blade secured to the shear base, a shear lever hinged to the shear base, a moving blade secured to the shear lever, a reset spring connected to the shear lever, a cam rotatably connected to the shear base, and a roller rotatably connected to the shear lever; the driving assembly comprises an electric motor driving the cam to rotate and a speed reducer, a cam surface and a roller outer circular surface interacting to drive the shear lever to swing to thereby drive the moving blade and the stationary blade to be fitted to shear off a screw, the cam surface and the roller outer circular surface being conical surfaces fitted with each other at an angle of X° so that when the cam is rotating, an axial component force is applied against the roller; the driving assembly further comprises a stationary housing, a motor bracket being secured to a rear portion of the stationary housing, the electric motor being mounted on the motor bracket, the speed reducer being mounted to the stationary housing.

In some implementations, a screw locating notch is formed at an edge of the shear base, a stationary blade securing groove is formed at a front side surface of the shear base below the screw locating notch, and the stationary blade is secured in the stationary blade securing groove.

In some implementations, a moving blade securing groove is formed at a rear side surface of the shear lever, the moving blade is secured in the moving blade securing groove, and a moving blade locating surface is formed at a front side surface of the shear base above the screw locating notch.

In some implementations, a bolt is securely provided on the shear base, a rear end of the bolt passing through a shaft hole in the shear base so as to be connected to a nut, a front end portion of the bolt being provided with a stop flange, the stop flange being disposed at a front side of the shear lever.

In some implementations, the shearing assembly further comprises a track plate connected to the shear lever, the front end portion of the bolt is provided with a stub at a front side of the stop flange, the track plate is rotatably connected to the stub, a track groove is formed on the track plate, and a track pin fitted with the track groove to drive the shear lever to reset is provided on the cam.

In some implementations, a numerical value of the X ranges from 3 to 8.

In some implementations, the speed reducer is a planetary gear reducer, the planetary gear reducer comprising a front-stage reduction gearset, a planetary gear carrier, a plurality of planetary gears mounted on the planetary gear carrier, and a planetary gearbox having an inner gear ring, the plurality of planetary gears being meshed with the inner gear ring of the planetary gearbox, the front-stage reduction gearset being provided with an output sun gear, the output sun gear being meshed with the plurality of planetary gears.

In some implementations, a flat square hole is formed in a center of the planetary gear carrier, the cam is provided with a central axis, the central axis is provided with a flat square section fitted with the flat square hole.

In some implementations, a microswitch configured to control the electric motor is further provided, the microswitch being disposed lateral to an outer circle of the planetary gear carrier, a recessed groove being formed on the outer circle of the planetary gear carrier; the microswitch comprises a switch spring, the switch spring being provided with a protrusion portion that is in movable contact with the outer circle of the planetary gear carrier and snapped in the recessed groove when moving to a position corresponding to the recessed groove, so that when the protrusion portion moves to contact the outer circle of the planetary gear carrier, the microswitch is closed, and when the protrusion portion is snapped in the recessed groove, the microswitch is open.

In some implementations, a switch wheel in rolling contact with the outer circle of the planetary gear carrier is arranged at a position where the protrusion portion is located.

With the technical solutions stated above, the disclosure offers the following benefits:
1. The cam moves circularly about the center on the shear base, and the shear lever swings about the bolt; a roller is provided on the shear lever, so that the cam surface acts upon the roller outer circular surface to drive the shear lever to swing, thereby driving the moving blade to be fitted with the stationary blade to shear off a screw. Since the cam surface and the roller outer circular surface are conical surfaces fitted with each other at an angle of X°, when the cam is rotating, a force imposed upon the roller further comprises an axial component F2 in addition to a force component F1 driving the shear lever to swing; moreover, since the shear lever takes the bolt as a support point, a force component F3 is further formed upon the shear lever, which drives the shear lever to move axially along the bolt, so that the moving blade and the stationary blade always press tightly against the sheared end surface; in this way, when the moving blade and the stationary blade are fitted to perform screw shearing, substantially no gap is left therebetween; without a gap between the moving blade and the stationary blade, no burrs would be formed on the sheared-off screw.
2. As the stationary blade securing groove ensures a stationary blade mounting position, the moving blade securing groove ensures a moving blade mounting position, and the moving blade locating surface is provided at a front side surface of the shear base above the screw locating notch, under the action of the force component F3, the moving blade is pressed tightly and intimately against the moving blade locating surface to move towards the stationary blade. Since the relative position between the mounted position of the stationary blade and the moving blade locating surface has been established, substantially no gap is left when the moving blade and the stationary blade are fitted to perform screw shearing.
3. A too small numeral value of X leads to a too small axial force component acted upon the roller, resulting in an insufficient force driving the moving blade, so that the gap between the stationary blade and the moving blade cannot be reduced as much as possible, while a too large numerical value of X leads to a reduced shear force driving the moving blade. Therefore, the numerical value of X is set to a range from 3 to 8.
4. When the reset spring fails causing reset failure of the shear lever, the cam pushes the track plate via the track pin to reset the shear lever; therefore, cooperation between the track plate and the reset spring offers a double fail-safe to reset the shear lever.
5. The speed reducer is a planetary gear reducer, which not only serves to reduce the rotating speed and increase the output torque, as a conventional speed reduction mechanism does, but also offers a higher precision.
6. The flat square hole in the center of the planetary gear carrier and the central axis of the cam are fitted via the flat square section to thereby realize synchronous rotation. Since one complete shearing action is performed when the cam rotates by one revolution and meanwhile rotation of the planetary gear carrier is synchronous to rotation of the cam, the microswitch is open once when the planetary gear carrier rotates by one revolution; a recessed groove is formed on the outer circle of the planetary gear carrier, so that when the protrusion portion on the microswitch moves to contact the outer circle of the planetary gear carrier, the microswitch is closed, and when the protrusion portion is snapped in the recessed groove, the microswitch is open; in this way, the electric motor can be precisely controlled to shut down immediately upon completion of each shearing action.
7. The switch wheel is in rolling contact with the outer circle of the planetary gear carrier, which reduces friction and impact therebetween.

These features and advantages of the disclosure will be disclosed in detail through implementations with reference to the accompanying drawings below.

### BRIEF DESCRIPTION OF THE DRAWINGS

Hereinafter, the disclosure will be described in further detail with reference to the accompanying drawings:
Fig. 1 is a front view of a screw-cutting shear according to the disclosure;
Fig. 2 is an exploded structural schematic view of a shearing assembly;
Fig. 3 is a front side view of the screw-cutting shear according to the disclosure;
Fig. 4 is a structural schematic view of a cam;
Fig. 5 is a structural schematic view of a roller;
Fig. 6 is a schematic diagram of stresses on the cam and the roller;
Fig. 7 is a schematic diagram of a stress on a shear lever;
Fig. 8 is a structural schematic diagram of a screw-cutting shear according to the disclosure;
Fig. 9 is an exploded structural schematic diagram of a driving assembly;
Fig. 10 is a first schematic diagram of fitting between a planetary gear carrier and a microswitch;
Fig. 11 is a second schematic diagram of fitting between the planetary gear carrier and the microswitch.

Reference Numerals: shearing assembly 1; shear base 11; rotation support hole 111; shaft hole 112; screw locating notch 113, stationary blade securing groove 114; moving blade locating surface 115; shear lever 12; swing support hole 121; pin hole 122; moving blade securing groove 123; first securing hole 124; cam 13; central axis 131; track pin 132; flat square section 133; roller 14; roller pin 141; track plate 15; rotating hole 151; track groove 152; second securing hole 153; bolt 16; nut 161; stop flange 162; reset spring 17; stationary blade 18; moving blade 19; driving assembly 2; stationary housing 20; electric motor 21; motor bracket 211; front-stage reduction gearset 22; output sun gear 221; reduction gear ring 222; planetary gearbox 23; notch 231; planetary gear 24; planetary gear carrier 25; recessed groove 251; flat square hole 252; microswitch 3; switch wheel 31.

### DETAILED DESCRIPTION OF EMBODIMENTS

Hereinafter, the technical solutions of the implementations of the disclosure will be explained and described with reference to the accompanying drawings; however, the implementations described infra are only example implementations of the disclosure, not all of them. Other implementations derived by those skilled in the art based on the example implementations described herein without exercise of inventive work shall fall within the protection scope of the disclosure.

Those skilled in the art may appreciate that the implementations described *infra* and the features therein may be combined with each other without conflict.

The terms referred to herein are intended only for describing specific implementations, not for limiting the disclosure. For example, the terms indicating orientational or positional relationships such as "upper", "lower", "front", "rear", "inner", and "outer" are based on the orientational and positional relationships illustrated in the drawings, which are intended only for facilitating description of the disclosure and simplifying relevant depictions, but not for indicating or implying that the devices or elements compulsorily possess such specific orientations or are compulsorily configured and operated with the specific orientations; therefore, such terms should not be construed as limitations to the disclosure.

In the disclosure, unless otherwise explicitly provided and limited, the terms such as "mount", "connect", and "fix" should be understood broadly, which, for example, may refer to a fixed connection, a detachable connection, or an integrated connection; they may refer to a mechanical connection or an electrical connection; they may refer to a direct connection or an indirect connection via an intermediate medium; they may also refer to communication between the insides of two elements or interaction between the two elements. To a person of normal skill in the art, specific meanings of the above terms in the disclosure may be construed based on specific situations.

In the disclosure, unless otherwise explicitly provided and limited, an expression that a first feature is "above" or "below" a second feature may refer to a direct contact between the first feature and the second feature or may refer to a scenario where although the first feature and the second feature do not contact directly, they contact via a further feature therebetween. Moreover, the expression that the first feature is "above" or "over" or "on" the second feature refers to a situation where the first feature is exactly or generally over the second feature or only refers to a situation that the horizontal height of the first feature is higher than the second feature. The expression that the first feature is "under" or "below" or "beneath" the second feature refers to a situation where the first feature is exactly or generally below the second feature or only refers to a situation that the horizontal height of the first feature is lower than the second feature.

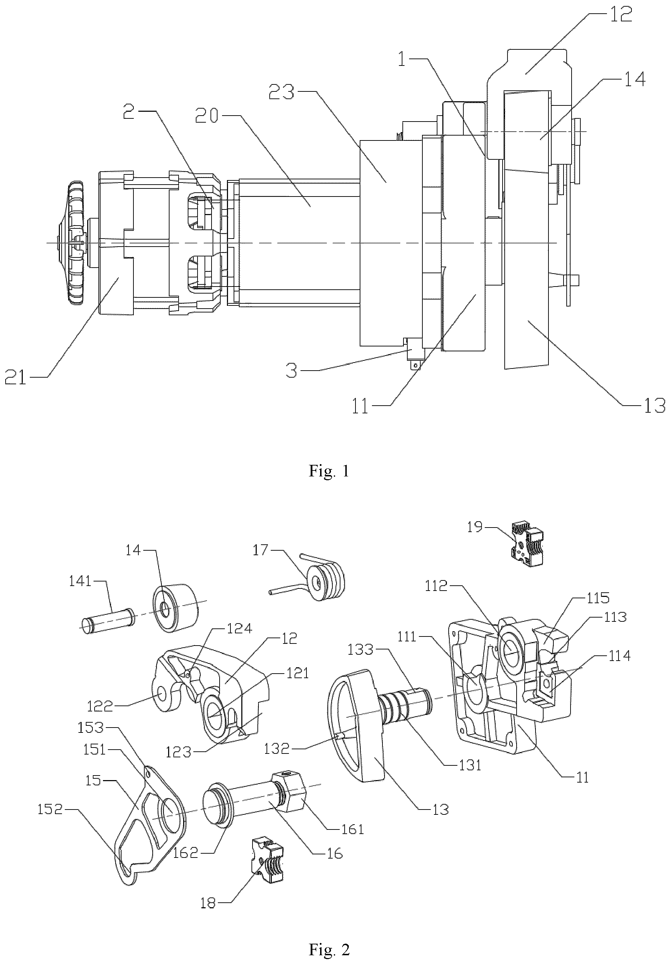

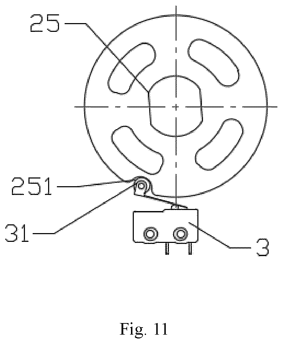

As illustrated in Fig. 1 to Fig. 11, a screw-cutting shear comprises a shearing assembly 1 and a driving assembly 2, the shearing assembly 1 comprising a shear base 11, a stationary blade 18 secured to the shear base 11, a shear lever 12 hinged to the shear base 11, a moving blade 19 secured to the shear lever 12, a reset spring 17 connected to the shear lever 12, a cam 13 rotatably connected to the shear base 11, and a roller 14 rotatably connected to the shear lever 12, the roller 14 being connected, via a roller pin 141, to a pin hole 122 in the shear lever. The driving assembly 2 comprises an electric motor 21 driving the cam 13 to rotate and a speed reducer, an output shaft of the electric motor being connected to an input end of the speed reducer, an output end of the speed reducer being connected to the cam 13, whereby a cam surface acts upon a roller outer circular surface to drive the shear lever 12 to swing, thereby driving the moving blade 19 to be fitted with the stationary blade 18 to shear off a screw, the cam surface and the roller outer circular surface being conical surfaces fitted with each other at an angle of X°.

In an implementation illustrated in Fig. 2, a rotation support hole 111 and a shaft hole 112 are provided in the shear base 11, a bolt 16 is secured on the shear base 11, and a swing support hole 121 connected to the bolt 16 is provided on the shear lever 12. A rear end of the bolt passes through the shaft hole 112 in the shear base so as to be connected to a nut 161, a front end of the bolt is provided with a stop flange 162, the stop flange 162 being disposed at a front side of the shear lever 12, the front end of the bolt 16 being provided with a stub at a front side of the stop flange 162. The cam 13 is provided with a central axis 131, the central axis 131 being rotatably supported in the rotation support hole 111; of course, a bearing may also be additionally provided. It is understood that, the bolt may also be replaced by a rotary shaft such as a pin.

In the technical solution described *supra,* the cam moves circularly about the center on the shear base, and the shear lever swings about the bolt; a roller is provided on the shear lever, so that the cam surface acts upon the roller outer circular surface to drive the shear lever to swing, thereby driving the moving blade to be fitted with the stationary blade to shear off a screw.

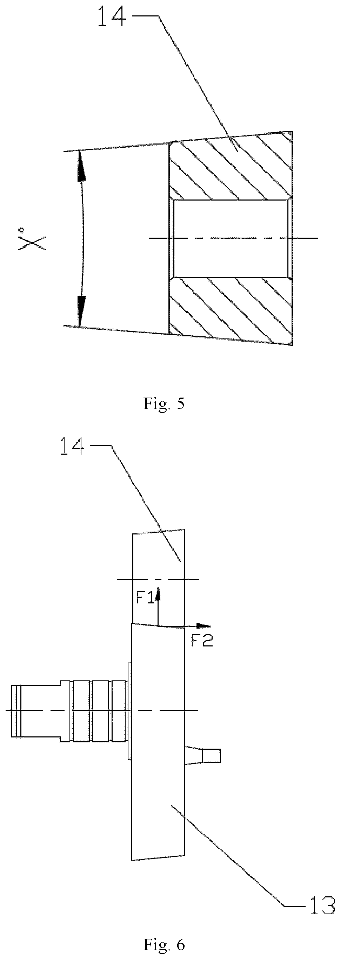

As illustrated in Figs. 5 through 7, since the cam surface and the roller outer circular surface are conical surfaces fitted with each other at an angle of X°, when the cam is rotating, a force imposed upon the roller further comprises an axial component F2 in addition to a force component F1 driving the shear lever to swing; moreover, since the shear lever takes the bolt as a support point, a force component F3 is further formed upon the shear lever, which drives the shear lever to move axially along the bolt, driving the moving blade to move simultaneously, so that the moving blade and the stationary blade always press tightly against the sheared end surface; in this way, when the moving blade and the stationary blade are fitted to perform screw shearing, substantially no gap is left therebetween; without a gap between the moving blade and the stationary blade, no burrs would be formed on the sheared-off screw.

A too small numeral value of X leads to a too small axial force component acted upon the roller, resulting in an insufficient force driving the moving blade, so that the gap between the stationary blade and the moving blade cannot be reduced as much as possible, while a too large numerical value of X leads to a reduced shear force driving the moving blade. Therefore, the numerical value of X is set to a range from 3 to 8, for example, 5.

Specifically, as illustrated in Fig. 2, a screw locating notch 113 is formed at an edge of the shear base 11, a stationary blade securing groove 114 is formed on a front side surface of the shear base below the screw locating notch 113, the stationary blade 18 being secured in the stationary securing groove 114. A moving blade securing groove 123 is provided at a rear side surface of the shear lever, the moving blade 19 being secured in the moving blade securing groove 123, and a moving blade locating surface 115 is provided on the front side surface of the shear base above the screw locating notch. As the stationary blade securing groove ensures a stationary blade mounting position and the moving blade securing groove ensures a moving blade mounting position, under the action of the force component F3, the moving blade is pressed tightly and intimately against the moving blade locating surface to move towards the stationary blade. Since the relative position between the mounted position of the stationary blade and the moving blade locating surface has been established, substantially no gap is left when the moving blade and the stationary blade are fitted to perform screw shearing.

The reset spring 17 is mounted on a housing (not shown) of the screw-cutting shear. The reset spring 17 may adopt a torsion spring. A spring mounting pin for mounting the reset spring 17 is provided on the housing, one leg of the reset spring being supported on the shear lever, the other leg thereof being supported on the housing. When the moving blade and the stationary blade are fitted to complete screw shearing, the cam stops driving the shear lever, so that under the action of the reset spring 17, the shear lever is reset.

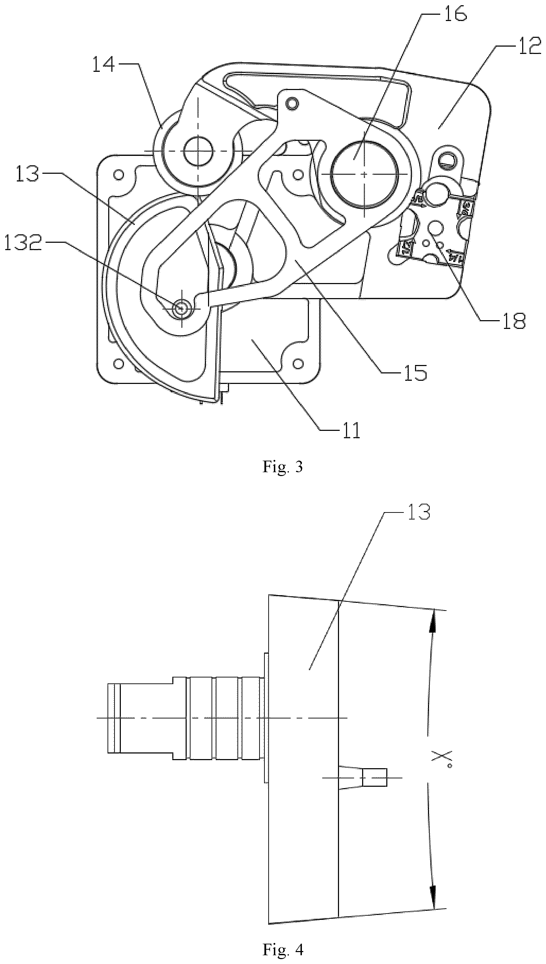

As illustrated in Figs. 2 and 3, furthermore, to ensure reliability of resetting of the shear lever, a track plate 15 is further provided. A rotating hole 151 and a track groove 152 are formed on the track plate 15. The track plate 15 is rotatably connected to the stub via the rotating hole 151. A track pin 132 fitted with the track groove 152 is provided on the cam 13. The track plate 15 and the shear lever 12 are integrally connected. A first securing hole 124 is formed in the shear lever 12, and a second securing hole 153 is formed in the track plate 15. A securing shaft may be connected between the first securing hole 124 and the second securing hole 153, and in this implementation, it is a leg of the reset spring that is connected therebetween. When the reset spring fails causing reset failure of the shear lever, the cam pushes the track plate via the track pin to reset the shear lever; therefore, cooperation between the track plate and the reset spring offers a double fail-safe to reset the shear lever.

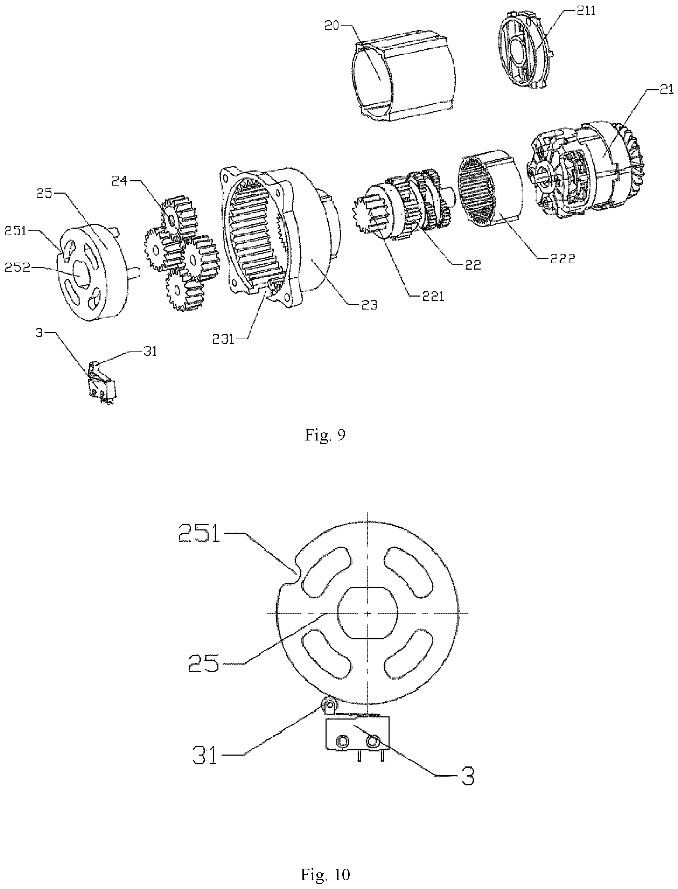

In this implementation, the speed reducer is a planetary gear reducer, which not only serves to reduce the rotating speed and increase the output torque, as a conventional speed reduction mechanism does, but also offers a higher precision. As illustrated in Fig. 9, the planetary gear reducer comprises a front-stage reduction gearset 22, a planetary gear carrier 25, a plurality of planetary gears 24 mounted on the planetary gear carrier 25, and a planetary gearbox 23 having an inner gear ring. The plurality of planetary gears 24 are meshed with the inner gear ring of the planetary gearbox 23. The front-stage reduction gearset 22 may comprise multiple stages of planetary gear reduction mechanisms. The front-stage reduction gearset comprises an output sun gear 221 and a reduction gear ring 222, the output sun gear 221 being meshed with the plurality of planetary gears 23. A flat square hole 252 is formed in the center of the planetary gear carrier 25, and the central axis 131 is provided with a flat square section 133 fitted with the flat square hole 252.

In addition, a stationary housing 20 is further provided. A motor bracket 211 is secured to a rear portion of the stationary housing; a projected portion is formed at a front end of the motor bracket 211, the projected portion being inserted in an inner cavity of the stationary housing 20; a stud is provided at an upper side and a lower side of the projected portion, respectively, the projected portion being secured to the rear portion of the stationary housing via the studs. An output hole is formed in the center of the motor bracket 211; the electric motor 21 is secured to the motor bracket 211, with the output shaft passing through the output hole. The front-stage reduction gearset 22 is disposed in the stationary housing 20; a rear portion of the planetary gearbox 23 is disposed in the stationary housing 20, while a front portion thereof is secured to the shear base via a screw.

After the shearing assembly 1 completes one shearing action, the electric motor needs to shut down timely to change another to-be-sheared screw, preparing for next shearing action. Currently, this work is performed manually by controlling a switch button. Since the shearing action of the moving blade is driven by a cam, one complete shearing action is performed when the cam rotates by one revolution. If a corresponding sensor is mounted to directly detect a rotational travel of the cam, the cost would increase, while the precision cannot be ensured either. Since one revolution of the cam corresponds to one revolution of the planetary gear carrier, shutdown upon completion of one shearing action may be controlled via rotation of the planetary gear carrier.

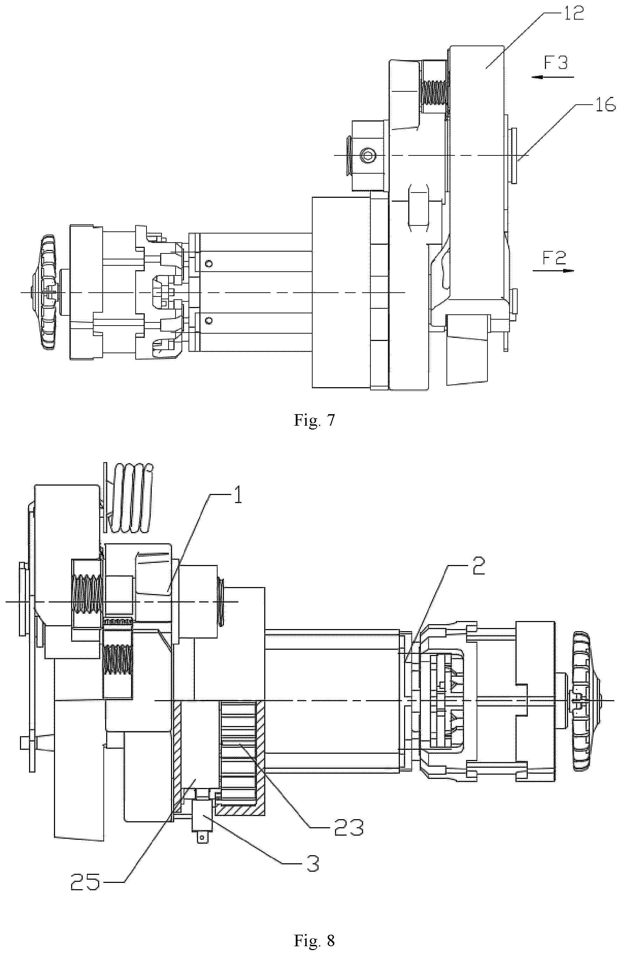

As illustrated in Figs. 8 through 11, to implement the idea described *supra,* a microswitch 3 configured to control the electric motor 21 is further provided, the microswitch 3 being disposed lateral to an outer circle of the planetary gear carrier. A recessed groove 251 is formed in the outer circle of the planetary gear carrier. The microswitch 3 is provided with a switch spring, the switch spring being provided with a protrusion portion that is in movable contact with the outer circle of the planetary gear carrier and snapped into the recessed groove when moving to a position corresponding to the recessed groove. When the protrusion portion moves in contact with the outer circle of the planetary gear carrier, the switch is closed; when the protrusion portion is snapped in the recessed groove, the switch is open. It may be understood that the protrusion portion may be arranged such that its arc surface is in movable contact with the outer circle of the planetary gear carrier.

Furthermore, a switch wheel 31 in rolling contact with the outer circle of the planetary gear carrier is provided at position of the protrusion portion, and the corresponding recessed groove 251 may be a circular recessed groove. The planetary gear carrier 23 is provided with a notch 231 at a position where the microswitch is mounted, the switch wheel 31 passing through the notch 231 to movably contact with the outer circle of the planetary gear carrier 25. The switch wheel is configurable to be in rolling contact with the outer circle of the planetary gear carrier so as to reduce friction and impact therebetween.

What have been described above are only embodiments of the disclosure; however, the protection scope of the disclosure is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. A screw-cutting shear, comprising a shearing assembly and a driving assembly, wherein the shearing assembly comprises a shear base, a stationary blade secured to the shear base, a shear lever hinged to the shear base, a moving blade secured to the shear lever, a reset spring connected to the shear lever, a cam rotatably connected to the shear base, and a roller rotatably connected to the shear lever; the driving assembly comprises an electric motor driving the cam to rotate and a speed reducer, a cam surface and a roller outer circular surface interacting to drive the shear lever to swing to thereby drive the moving blade and the stationary blade to be fitted to shear off a screw, the cam surface and the roller outer circular surface being conical surfaces fitted with each other at an angle of X° so that when the cam is rotating, an axial force component is applied against the roller; the driving assembly further comprises a stationary housing, a motor bracket being secured to a rear portion of the stationary housing, the electric motor being mounted on the motor bracket, the speed reducer being mounted to the stationary housing.

2. The screw-cutting shear of claim 1, wherein a screw locating notch is formed at an edge of the shear base, a stationary blade securing groove is formed at a front side surface of the shear base below the screw locating notch, and the stationary blade is secured in the stationary blade securing groove.

3. The screw-cutting shear of claim 2, wherein a moving blade securing groove is formed at a rear side surface of the shear lever, the moving blade is secured in the moving blade securing groove, and a moving blade locating surface is formed at a front side surface of the shear base above the screw locating notch.

4. The screw-cutting shear of claim 1, wherein a bolt is securely provided on the shear base, a rear end of the bolt passing through a shaft hole in the shear base so as to be connected to a nut, a front end portion of the bolt being provided with a stop flange, the stop flange being disposed at a front side of the shear lever.

5. The screw-cutting shear of claim 4, wherein the shearing assembly further comprises a track plate connected to the shear lever, the front end portion of the bolt is provided with a stub at a front side of the stop flange, the track plate is rotatably connected to the stub, a track groove is formed on the track plate, and a track pin fitted with the track groove to drive the shear lever to reset is provided on the cam.

6. The screw-cutting shear of claim 1, wherein a numerical value of the X ranges from 3 to 8.

7. The screw-cutting shear of claim 1, wherein the speed reducer is a planetary gear reducer, the planetary gear reducer comprising a front-stage reduction gearset, a planetary gear carrier, a plurality of planetary gears mounted on the planetary gear carrier, and a planetary gearbox having an inner gear ring, the plurality of planetary gears being meshed with the inner gear ring of the planetary gearbox, the front-stage reduction gearset being provided with an output sun gear, the output sun gear being meshed with the plurality of planetary gears.

8. The screw-cutting shear of claim 7, wherein a flat square hole is formed in a center of the planetary gear carrier, the cam is provided with a central axis, the central axis is provided with a flat square section fitted with the flat square hole.

9. The screw-cutting shear of claim 7, wherein a microswitch configured to control the electric motor is further provided, the microswitch being disposed lateral to an outer circle of the planetary gear carrier, a recessed groove being formed on the outer circle of the planetary gear carrier; the microswitch comprise a switch spring, the switch spring being provided with a protrusion portion that is in movable contact with the outer circle of the planetary gear carrier and snapped in the recessed groove when moving to a position corresponding to the recessed groove, so that when the protrusion portion moves to contact the outer circle of the planetary gear carrier, the microswitch is closed, and when the protrusion portion is snapped in the recessed groove, the microswitch is open.

10. The screw-cutting shear of claim 9, wherein a switch wheel in rolling contact with the outer circle of the planetary gear carrier is arranged at a position where the protrusion portion is located.
